(19) Europäisches Patentamt
European Patent Office
Office européen des brevets

(11) Publication number: **0 108 223**
**A1**

(12) # EUROPEAN PATENT APPLICATION

(21) Application number: 83109222.6

(51) Int. Cl.$^3$: C 08 F 255/02

(22) Date of filing: 17.09.83

(30) Priority: 08.11.82 US 439668

(43) Date of publication of application:
16.05.84 Bulletin 84/20

(84) Designated Contracting States:
AT BE CH DE FR GB IT LI NL SE

(71) Applicant: AMERICAN CYANAMID COMPANY
1937 West Main Street P.O. Box 60
Stamford Connecticut 06904(US)

(72) Inventor: Chang, Eugene yue chieh
532 Rolling Hills Road
Bridgewater New Jersey 08807(US)

(74) Representative: Wächtershäuser, Günter, Dr.
Tal 29
D-8000 München 2(DE)

(54) **Sulfur-vulcanizable chlorinated polyethylene-acrylate copolymer graft elastomer.**

(57) Chlorinated polyethylene elastomers are rendered sulfur-vulcanizable by the incorporation thereinto of a copolymer comprising one or more acrylic acid esters, or one or more acrylic acid esters and acrylonitrile, and an ethylenically unsaturated comonomer containing a cure site for sulfur vulcanization. Upon vulcanization, the elastomers exhibit excellent resistance to hydrocarbon oils.

EP 0 108 223 A1

0108223

## SULFUR-VULCANIZABLE CHLORINATED POLYETHYLENE-ACRYLATE COPOLYMER GRAFT ELASTOMER

This invention relates to sulfur-vulcanizable chlorinated polyethylene graft copolymers. More particularly, it relates to chlorinated polyethylene having grafted thereon a copolymer comprising one or more acrylic acid esters, or a mixture of one or more acrylic acid esters and acrylonitrile, and an ethylenically unsaturated comonomer containing a cure-site for sulfur vulcanization; to vulcanizable compositions containing said chlorinated polyethylene graft copolymer; and to the vulcanized elastomers obtained therefrom.

Graft copolymers of chlorinated polyethylene and acrylic acid esters are known in the art; see Nishi et al. Chem. Abstracts 78 098305M, 78: 098306N, and 78: 137116X; Yoshimoto and Nose, Chem. Abstracts 81: 170465v; Dohi et al., Chem. Abstracts 83: 165227f, and 83: 179914q; and Hirahara, Chem. Abstracts 85: 047553C. However, these elastomers are not sulfur-vulcanizable. Either peroxide or radiation vulcanization must be employed to cure these elastomers. A disadvantage of peroxide and radiation vulcanization, however, is the fact that they are not conventionally used in the rubber industry.

It would be desirable, therefore, to have a grafted chlorinated polyethylene elastomer which is sulfur-vulcanizable. It is an object, therefore, of this invention to prepare a grafted chlorinated polyethylene copolymer which can be readily cured using conventional sulfur-vulcanization techniques.

## SUMMARY OF THE INVENTION

In accordance with the present invention, there is provided a sulfur-vulcanizable elastomeric composition obtained by grafting onto chlorinated polyethylene a copolymer of an ester or mixture of esters having the formula:

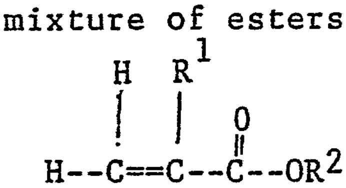

(I)

wherein $R^1$ is selected from hydrogen and $C_1$-$C_2$ alkyl, and $R^2$ is selected from $C_1$-$C_8$ alkyl and $C_1$-$C_4$ alkoxyalkyl, or a mixture of an ester or esters of formula (I) and acrylonitrile, and an ethylenically unsaturated comonomer containing a sulfur-vulcanizable cure-site.

Also, within the scope of the present invention are vulcanizable compositions comprising a mixture of the grafted chlorinated polyethylene, previously described, and about 0.1 to 3 parts by weight sulfur, or a thiuram sulfide, per hundred parts by weight of said grafted chlorinated polyethylene copolymer.

Still further within the scope of the present invention are vulcanized elastomers obtained by vulcanizing an elastomer of the present invention by subjecting the above-described vulcanizable composition to sulfur vulcanization at suitable temperatures for a period of time sufficient to effect essentially complete vulcanization. The vulcanized elastomers of this invention exhibit excellent resistance to hydrocarbon oils.

## DETAILED DESCRIPTION OF THE INVENTION

The graft elastomers of the present invention comprise a chlorinated polyethylene having grafted thereon a copolymer comprising one or more esters of formula (I), or one or more esters of formula (I) and acrylonitrile, and an ethylenically unsaturated comonomer containing a reactive halogen or olefin cure-site for sulfur-vulcanization, wherein the weight ratio of chlorinated polyethylene to the total weight of reactive monomers ranges from about 0.25:1 to 5:1, and the weight ratio of the ester or esters of formula (I), or ester or esters of formula (I) and acrylonitrile, to ethylenically unsaturated comonomer containing a sulfur-vulcanizable cure-site ranges from about 1:1 to 20:1. Preferably, the weight ratio of chlorinated polyethylene to the total weight of reactive monomers ranges from about 1:1 to 1.5:1, and preferably the weight ratio of the ester or esters of formula (I), or ester or esters of formula (I) and acrylonitrile, to ethylenically unsaturated comonomer containing the sulfur vulcanizable cure-site ranges from about 2:1 to 5.5:1.

When the ethylenically unsaturated comonomer is a halogen (e.g., chlorine or bromine)-containing monomer, such as vinyl chloroacetate, it is present in an amount sufficient to provide at least about 0.2 percent, preferably about 0.3 to 4.5 percent, and most preferably about 0.4 to 1.5 percent, by weight, of grafted, sulfur-vulcanizable halogen, based on the total weight of the elastomer.

When the ethylenically unsaturated comonomer is an olefin cure site containing monomer, such as 5-ethylidene-2-norbornene, it is present in an amount sufficient to provide in the elastomer composition at least about 0.2 percent, preferably about 0.2 to 5 percent, and most preferably about 0.6 to 1.2 percent, by weight, of unsaturation.

Most preferably, the ester of formula (I) is ethyl acrylate and the ethylenically unsaturated monomer containing the sulfur vulcanizable cure-site is vinyl chloroacetate or 5-ethylidene-2-norbornene. Further illustrative examples of esters of formula (I) include ethyl methacrylate, n-propyl acrylate, n-butyl acrylate, 2-ethylhexyl methacrylate, 2-methoxyethyl acrylate, 2-ethoxyethyl methacrylate, 2-n-octyloxyethyl acrylate, and the like.

Active halogen-containing vinyl monomers which may be used include those represented by the formula:

$$CH_2{=}CH{-}R^3 \qquad \text{(II)}$$

wherein $R^3$ may be selected from:

$$-O\overset{\overset{O}{\|}}{C}-CH_2X$$

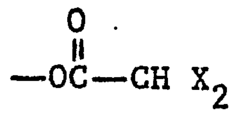

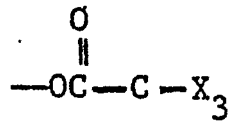

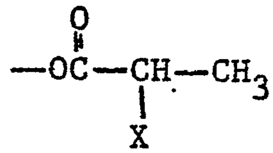

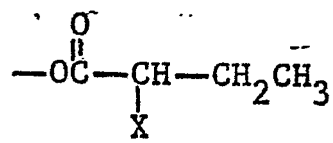

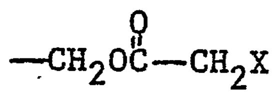

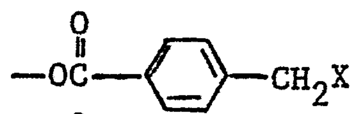

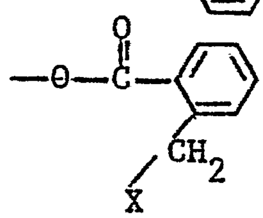

$-OCH_2CH_2X$

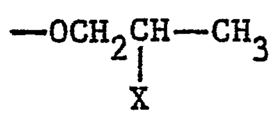

and

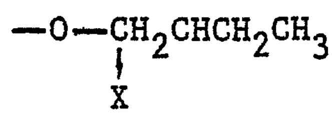

wherein X is a halogen atom, preferably chlorine or bromine.

Illustrative examples of suitable ethylenically unsaturated monomers containing an olefinic cure-site include the following: allyl acrylate, crotyl acrylate, 2,5-norbornadiene, 2,5-norbornadiene dimer, hexahydromethanonaphthalene, 1,4-hexadiene, 1,7-octadiene, methyltetrahydroindene, 1,5-cyclooctadiene, and the like.

The grafted polymer of the present invention may be prepared by conventional methods such as, for example, by mixing the chlorinated polyethylene, in powder or pellet form, and monomers to be grafted thereon and heating the mixture to about 60-80°C. to swell the monomers into the polymer. A suitable free radical catalyst, such as benzoyl peroxide, or tertiary butyl peroctoate, may then be added, and the monomers polymerized at about 80°C. The polymer is then isolated, washed and dried.

The graft elastomers may then be compounded by conventional means, e.g., by Banbury mixer, two-roll rubber mill, or the like. Sulfur, sulfur donors, accelerators, antioxidants, carbon black, and other fillers and additives as are commonly employed in the compounding of acrylic elastomers and the like may be used in the vulcanization system and such methods as those described, for example, in Mihal, U.S. Patent 3,458,461, and Behrens, U.S. Patent 3,506,624, may be used to vulcanize the elastomers. The compounded vulcanized elastomer may then be fabricated into useful articles by conventional means, e.g., by compression molding, extrusion, and the like.

The following examples are provided for illustrative purposes and may include particular features of the invention. However, the examples are not to be construed as limiting the invention in any way, it being understood that there are many variations which are possible without departing from the spirit or scope of the invention. All parts and percentages are by weight unless otherwise noted.

Example 1

Preparation of a Graft Copolymer of Ethyl Acrylate-Vinyl Chloroacetate on Chlorinated Polyethylene

A stirred suspension of a chlorinated polyethylene [120 grams of DOW CPE Elastomer CM-0136 (chlorine content 36% by weight) made by Dow Chemical Company], in water (550 grams), was heated under a nitrogen atmosphere to 63°C, and

ethyl acrylate (56 grams) and vinyl chloroacetate (14 grams) were then added thereto. The resulting mixture was stirred at 63°C., under nitrogen, for 20 minutes, and a solution of benzoyl peroxide (1.0 gram) in ethyl acrylate (10 grams) added thereto. The temperature was raised to 70-75°C., over about 30 minutes, and the slurry was stirred until the resulting exotherm subsided. The temperature was then raised to 80°C. and the slurry stirred thereat for one hour. The insoluble material was recovered, washed successively with 5% aqueous sodium bicarbonate and water, and dried to obtain 190 grams of a graft copolymer which is soluble in trichloroethane.

The product was extracted with ethyl acetate in a Soxhlet extractor to remove soluble, ungrafted copolymer and the insoluble grafted copolymer was subsequently dried and reweighed. The graft efficiency was found to be 84.3%.

The polymer composition, based on the amounts originally charged (as are the polymer composition products in Examples 2-6), was 60% chlorinated polyethylene, 33% ethyl acrylate, and 7% vinyl chloroacetate.

Example 2

Preparation of a Graft Copolymer of Ethyl Acrylate-Vinyl Chloroacetate on Chlorinated Polyethylene

A stirred mixture of CM-0136 (375 grams), ethyl acrylate (250 grams), vinyl chloroacetate (60 grams) and dodecyl mercaptan (0.375 gram), in water (2500 grams), was heated, under a nitrogen atmosphere, to 60°C. The mixture was stirred at 60°C for 30 minutes, and a solution of benzoyl peroxide (3.75 grams) in ethyl acrylate (65 grams) added thereto. The temperature of the reaction mixture was raised to 80°C., over about 25 minutes, and the mixture was stirred until the resulting exotherm subsided. The temperature was then again raised to 80°C. and the reaction mixture stirred thereat for 2 hours. The insoluble beads were recovered, washed successively with 5% aqueous sodium bicarbonate and water, and dried to obtain 706.2 grams of a graft copolymer which was soluble in trichloroethane.

Extraction of the product with ethyl acetate in a

Soxhlet extractor and reweighing the subsequently dried product showed that the graft efficiency was 88.9%.

The polymer composition was 50% chlorinated polyethylene, 42% ethyl acrylate, and 8% vinyl chloroacetate.

Example 3

Preparation of a Graft Copolymer of Ethyl Acrylate-Acrylonitrile-Vinyl Chloroacetate on Chlorinated Polyethylene

A stirred mixture of CM-0136 (180 grams), ethyl acrylate (51 grams), acrylonitrile (45 grams), vinyl chloroacetate (24 grams), dodecyl mercaptan (0.15 gram), and sodium chloride (50 grams) in water (1000 grams) was heated, under a nitrogen atmosphere, to 60°C. The mixture was stirred at 60°C. for 40 minutes, and benzoyl peroxide (1.5 grams) was added thereto. The temperature of the reaction mixture was raised to 80°C., over about 20 minutes, and the mixture stirred until the reaction exotherm subsided. The temperature was then again raised to 80°C. and the reaction mixture stirred thereat for one hour. The insoluble beads were then recovered, washed successively with 5% aqueous sodium bicarbonate and water, and dried to obtain 268 grams of a graft copolymer which was soluble in trichloroethane.

The polymer composition was 60% chlorinated polyethylene, 17% ethyl acrylate, 15% acrylonitrile, and 8% vinyl chloroacetate.

Example 4

Preparation of a Graft Copolymer of Ethyl Acrylate-5-Ethylidene-2-Norbornene on Chlorinated Polyethylene

A stirred mixture of CM-0136 (150 grams), ethyl acrylate (100 grams), 5-ethylidene-2-norbornene (30 grams), and dodecyl mercaptan (0.15 gram) in water (900 grams) was heated to 60°C. under a nitrogen atmosphere. The mixture was stirred at 60°C. for 30 minutes, and a solution of benzoyl peroxide (1.5 grams) in ethyl acrylate (20 grams) was added thereto. The temperature of the reaction mixture was raised to 80°C., over about 20 minutes, and the mixture was stirred until the reaction exotherm subsided. The temperature was then raised again to 80°C. and the reaction mixture stirred thereat for 40 minutes. The insoluble beads were then

recovered, washed successively with 5% aqueous sodium bicarbonate and water, and dried to obtain 259 grams of a graft copolymer.

Extraction of the product with ethyl acetate in a Soxhlet extractor and recovery, drying and reweighing of the extracted product showed that the graft efficiency was 77%.

The polymer composition was 50% chlorinated polyethylene, 40% ethyl acrylate, and 10% 5-ethylidene-2-norbornene.

Example 5

Preparation of Graft Copolymer of Ethyl Acrylate-Vinyl Chloroacetate on Chlorinated Polyethylene

The procedure of Example 2 was followed utilizing CM-0136 (210 grams), ethyl acrylate (76 grams), vinyl chloroacetate (24 grams), and dodecyl mercaptan (0.15 gram) in 850 mls of water, utilizing 1.5 grams of benzoyl peroxide as the initiator.

The graft efficiency was found to be 82.6%

The polymer composition was 70% chlorinated polyethylene, 22% ethyl acrylate, and 8% vinyl chloroacetate.

Example 6

Preparation of Graft Copolymer of Ethyl Acrylate-Vinyl Chloroacetate on Chlorinated Polyethylene

The procedure of Example 1 was followed utilizing CM-0136 (240 grams), ethyl acrylate (36 grams), vinyl chloroacetate (24 grams) in 100 mls of water, utilizing 0.75 gram of benzoyl peroxide as the initiator.

The polymer composition was 80% chlorinated polyethylene, 12% ethyl acrylate, and 8% vinyl chloroacetate.

Example 7

A vulcanizable composition was prepared by milling the ingredients shown below on a standard two-roll rubber mill:

| Component | Parts by Weight |
|---|---|
| Polymer of Example 1 | 100 |
| Carbon black | 50 |
| Stearic acid | 2 |
| Curative C-50 (a soap curative made by American Cyanamid Company) | 8 |
| Sulfur | 0.25 |
| Epoxy resin (Epon® 828, made by Shell Chemical Co.) | 10 |
| Antioxidant (CYANAFLEX® 50, made by American Cyanamid Company) | 4 |
| Calcium hydroxide | 2 |

The composition was mold-cured at 176°C. for 15 minutes, and the resulting sheet (6 inch x 6 inch x 0.0625 inch, the dimensions being the same for all sheets tested in the following Examples as well) was post-cured in an oven at 120°C. for 16 hours.

The resulting product sheet exhibited the following properties:

| | |
|---|---|
| Hardness, Shore "A" | 80 |
| Tensile strength, psi | 1610 |
| Elongation at break, % | 370 |
| Volume swell(1), % | 21 |

(1) After 22 hours at 150°C. in automatic transmission fluid

Substitution of CM-0136 for the polymer of Example 1 in the vulcanizable composition, just described, and heating the resulting composition in a mold at 176°C. for 15 minutes did not produce a cured elastomer.

## Example 8

A vulcanizable composition was prepared by milling the ingredients shown below on a standard two-roll mill:

| Component | Parts by Weight |
|---|---|
| Polymer of Example 2 | 100 |
| Carbon Black | 50 |
| Stearic Acid | 2 |
| Curative C-50 | 8 |
| Sulfur | 0.25 |

The composition was mold-cured at 176°C. for 15 minutes, and the resulting sheet was post-cured in an oven at 120°C. for 16 hours.

The resulting product sheet exhibited the following properties:

| | |
|---|---|
| Hardness, Shore "A" | 85 |
| Tensile strength, psi | 1935 |
| Elongation at break, % | 315 |
| Volume swell(1), % | 21 |

(1) After 22 hours at 150°C. in automatic transmission fluid

## Example 9

A vulcanizable composition was prepared by milling the ingredients shown below on a standard two-roll rubber mill:

| Component | Parts by Weight |
|---|---|
| Polymer of Example 3 | 100 |
| Carbon Black | 50 |
| Stearic Acid | 2 |
| Curative C-50 | 8 |
| Sulfur | 0.25 |
| Antioxidant (CYANAFLEX® 50) | 4 |
| Calcium hydroxide | 2 |

The composition was mold-cured at 176°C. for 15 minutes, and the resulting sheet was post-cured in an oven at 120°C. for 16 hours.

The resulting product sheet exhibited the following properties:

| | |
|---|---|
| Hardness, Shore "A" | 97 |
| Tensile strength, psi | 2080 |
| Elongation at break, % | 145 |
| Volume swell(1), % | 14 |

(1) After 22 hours at 150°C. in automatic transmission fluid.

## Example 10

A vulcanizable composition was prepared by milling the ingredients shown below on a standard two-roll rubber mill:

| Component | Parts by Weight |
|---|---|
| Polymer of Example 4 | 100 |
| Carbon black | 50 |
| Stearic acid | 1 |
| Mercaptobenzothiazole | 1.5 |
| Sulfur | 1.5 |
| Zinc oxide | 5 |
| Accelerator (CYURAM® DS, made by American Cyanamid Company) | 1.5 |
| Antioxidant (CYANAFLEX® 50) | 2 |

The composition was mold-cured at 176°C. for 15 minutes, and the resulting sheet was post-cured in an oven at 120°C. for 16 hours.

The resulting product exhibited the following properties:

| | |
|---|---|
| Hardness, Shore "A" | 93 |
| Tensile strength, psi | 2560 |
| Elongation at break, % | 75 |
| Volume swell(1), % | 4 |

(1) After 22 hours at 150°C. in automatic transmission fluid.

## Example 11

The procedure of Example 9 was followed in every detail except that, instead of the Polymer of Example 3, 100 parts by weight of the polymer of Example 5 was used, and the amount of calcium hydroxide used was reduced to one part by weight. The physical properties of the resulting product sheet are shown below:

| | |
|---|---|
| Hardness, Shore "A" | 86 |
| Tensile strength, psi | 1485 |
| Elongation at break, % | 355 |
| Volume swell(1), % | 36 |

(1) After 22 hours at 150°C. in automatic transmission fluid.

## Example 12

The procedure of Example 7 was followed in every detail except that the polymer of Example 6 was used in place of the polymer of Example 1, the carbon black was increased to 60 parts by weight, and no stearic acid, or calcium hydroxide, was used. The physical properties of the resulting product sheet are shown below:

| | |
|---|---|
| Hardness, Shore "A" | 87 |
| Tensile strength, psi | 1285 |
| Elongation at break, % | 405 |

WHAT IS CLAIMED IS:

1. A sulfur-vulcanizable elastomer composition comprising a chlorinated polyethylene grafted with a copolymer of one or more esters having the formula:

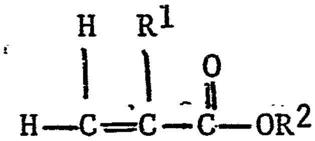

(I)

wherein $R^1$ is selected from hydrogen and $C_1$-$C_2$ alkyl, and $R^2$ is selected from $C_1$-$C_8$ alkyl and $C_1$-$C_4$ alkoxyalkyl, or a mixture of one or more esters of formula (I) and acrylonitrile, and a sulfur-vulcanizable active halogen-containing, or double bond-containing, vinyl comonomer, wherein the weight ratio of chlorinated polyethylene to the total weight of reactive monomers ranges from about 0.25:1 to 5:1, and the weight ratio of ester or esters of formula (I), or ester or esters of formula (I) and acrylonitrile, to sulfur-vulcanizable active halogen-containing, or double bond-containing, vinyl comonomer ranges from about 1:1 to 20:1.

2. The composition of Claim 1 wherein the weight ratio of chlorinated polyethylene to the total weight of reactive monomers ranges from about 1:1 to 1.5:1.

3. The composition of Claim 1 wherein the weight ratio of the ester or esters of formula (I), or ester or esters of formula (I) and acrylonitrile, to sulfur-vulcanizable active halogen-containing, or double bond-containing, vinyl comonomer ranges from about 2:1 to 5.5:1.

4. The composition of Claim 1 wherein the ester of formula (I) is ethyl acrylate, and the sulfur-vulcanizable vinyl comonomer is vinyl chloroacetate which is present in an amount sufficient to provide at least about 0.2 percent, by weight of grafted, sulfur-vulcanizable halogen, based on the total weight of the elastomer.

5. The composition of Claim 1 wherein the ester of formula (I) is ethyl acrylate, and the sulfur-vulcanizable vinyl comonomer is 5-ethylidene-2-norbornene which is present in an amount sufficient to provide in the elastomer composition at least about 0.2 percent, by weight, of unsaturtion.

6. A vulcanizable composition comprising a mixture of (a) a grafted chlorinated polyethylene composition of Claim 1 and (b) about 0.1 to 3 parts by weight of sulfur, or a thiuram sulfide, per hundred parts by weight of said grafted chlorinated polyethylene composition.

7. The composition of Claim 6 wherein the ester of formula (I) is ethyl acrylate and the vinyl comonomer is selected from vinyl chloroacetate and 5-ethylidene-2-norbornene.

8. The composition of Claim 6 wherein the ester of formula (I) is ethyl acrylate, the vinyl comonomer is selected from vinyl chloroacetate and 5-ethylidene-2-norbornene, and the weight ratio of ethyl acrylate to vinyl comonomer ranges from about 2:1 to 5.5:1.

9. The elastomer obtained upon the sulfur vulcanization of the composition of Claim 1.

10. A method for rendering a chlorinated polyethylene sulfur-vulcanizable which comprises grafting thereunto a copolymer of one or more esters having the formula:

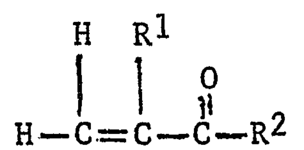

(I)

wherein $R^1$ is selected from hydrogen and $C_1$-$C_2$ alkyl and $R^2$ is selected from $C_1$-$C_8$ alkyl and $C_1$-$C_4$ alkoxyalkyl, or a mixture of one or more esters of formula (I) and acrylonitrile, and an ethylenically unsaturated comonomer containing a sulfur-vulcanizable cure-site, the weight ratio of chlorinated polyethylene to the total weight of reactive monomers ranging from about 0.25:1 to 5:1 and the weight ratio of ester or esters of formula (I), or ester or esters of formula (I) and acrylonitrile, to ethylenically unsaturated comonomer containing a sulfur-vulcanizable cure-site ranging from about 1:1 to 20:1.

0108223

European Patent Office

# EUROPEAN SEARCH REPORT

Application number

EP 83 10 9222

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 016 493 (UNIROYAL)<br>* claims 1,3,6; page 10, line 24 * | 1,5,7-10 | C 08 F 255/02 |
| | --- | | |
| A | US-A-4 253 927 (BERNSTEIN et al.) | | |
| | --- | | |
| A | US-A-3 272 772 (RUSSELL)<br>* claim 1; column 1, line 63 * | 1,4 | |
| | --- | | |
| A | GB-A-1 134 362 (ALLIED CHEMICAL) | | |
| | ----- | | |
| | | | TECHNICAL FIELDS SEARCHED (Int. Cl. 3) |
| | | | C 08 F |

The present search report has been drawn up for all claims

| Place of search | Date of completion of the search | Examiner |
|---|---|---|
| THE HAGUE | 23-02-1984 | MEULEMANS R.A.M.G.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document